# EUROPÄISCHE PATENTSCHRIFT

(11) **EP 4 089 382 B1**
(45) Veröffentlichungstag und Bekanntmachung des Hinweises auf die Patenterteilung: **28.08.2024**
(21) Anmeldenummer: 22169405.2
(22) Anmeldetag: 14.07.2015
(51) Int. Cl.: G01K 7/22, G01K 1/08, H01C 7/02, H01C 7/04, H01C 1/14, H01C 17/28

(54) **SENSORELEMENT UND SENSORANORDNUNG**
SENSOR ELEMENT AND SENSOR ARRANGEMENT
ÉLÉMENT CAPTEUR ET AGENCEMENT DE CAPTEUR

(30) Priorität: 25.07.2014 DE 102014110553
(43) Veröffentlichungstag der Anmeldung: 16.11.2022
(62) Teilanmeldung aus: 15738889.3
(73) Patentinhaber: TDK Electronics AG, 81671 München (DE)
(72) Erfinder: Strallhofer, Heinz, 8530 Deutschlandsberg (AT); Kirsten, Lutz Heiner, 8530 Deutschlandsberg (AT); Kloiber, Gerald, 8073 Feldkirchen (AT); Neuber, Danilo, 70563 Stuttgart (DE); Ihle, Jan, 8074 Raaba-Grambach (AT)
(74) Vertreter: Epping - Hermann - Fischer

(56) Entgegenhaltungen:
- EP-A1- 1 227 308
- US-A- 4 819 128
- "Sputtering Materials for VLSI and Thin Film Devices", 1 April 2010, ELSEVIER, 225 Wyman Street, Waltham, 02451, USA, ISBN: 978-0-8155-1593-7, article SARKAR JAYDEEP: "Nickel-vanadium (Ni-V) alloys", pages: 393 - 396, XP055969567

## Beschreibung

Es wird ein Sensorelement mit einem keramischen Grundkörper angegeben. Das Sensorelement kann insbesondere zur Messung einer Temperatur dienen. Beispielsweise handelt es sich um ein NTC-Sensorelement (negative temperature coefficient), also um einen Heißleiter.

Die Verwendung von Thermistorelementen in Sensoren ist aus dem Stand der Technik bekannt.

Die Druckschrift US 4,819,128 A offenbart ein monolithisches Keramikelement 1, das beispielsweise ein PTC-Thermistor oder ein Varistor sein kann und auf dem an gegenüberliegenden Oberflächen Kontaktelektroden aufgebracht sind.

Die Druckschrift EP 1 227 308 A1 beschreibt einen Thermistor mit einem keramischen Körper und mehrschichtigen Elektroden.

Aus der Veröffentlichung "Nickel-vanadium (Ni-V) alloys" (Sarkar Jaydeep: in "Sputtering Materials for VLSI and Thin Film Devices", 1. April 2010) sind weiterhin Legierungen von Nickel mit 7 wt% Vanadium und nicht-magnetischen Eigenschaften bekannt.

Die Anforderungen an Sensorelemente, insbesondere Temperatursensoren hinsichtlich der Langzeitbeständigkeit in aggressiven Medien und der Einsatztemperaturen erfordern eine hohe Robustheit. Gleichzeitig sollte das Sensorelement kostengünstig herstellbar sein.

Für eine elektrische Kontaktierung der Keramik werden metallische Elektroden auf den Grundkörper aufgebracht. Üblicherweise werden Dickschichtelektroden vorwiegend aus Silber- oder Goldpasten über einen Siebdruckprozess mit anschließendem Einbrand aufgebracht.

Es ist eine Aufgabe der vorliegenden Erfindung, ein verbessertes Sensorelement, eine verbesserte Sensoranordnung und ein verbessertes Herstellungsverfahren für ein Sensorelement anzugeben.

Gemäß einem ersten Aspekt der Erfindung wird ein Sensorelement mit einen keramischen Grundkörper angegeben. Vorzugsweise handelt es sich hierbei um eine NTC-Keramik. Beispielsweise weist die Keramik eine Perowskitstruktur umfassend die Elemente Y, Ca, Cr, Al, O oder eine Spinellstruktur umfassend die Elemente Ni, Co, Mn, O auf. Das Sensorelement ist insbesondere zur Messung einer Temperatur ausgebildet.

Das Sensorelement weist wenigstens eine Elektrode auf. Die Elektrode ist am Grundkörper, insbesondere auf einer Seitenfläche des Grundkörpers, angeordnet. Vorzugsweise sind zwei Elektroden am Grundkörper angeordnet. Beispielsweise ist eine weitere Elektrode auf einer weiteren, insbesondere auf einer gegenüberliegenden, Seitenfläche des Grundkörpers angeordnet. Das Sensorelement ist beispielsweise quaderförmig ausgebildet. Die Elektroden sind beispielsweise auf einer Ober- und Unterseite des Grundkörpers angeordnet. Im Folgenden wird eine der Elektroden im Detail beschrieben, wobei die Beschreibung gleichermaßen für die andere Elektrode gelten kann.

Vorzugsweise ist die gesamte Elektrode schichtförmig ausgebildet. Die Elektrode kann mehrere Schichten aufweisen.

Die Elektrode weist eine Schicht enthaltend Nickel auf. Die Schicht kann auch aus Nickel bestehen.

Eine nickelhaltige Schicht erlaubt eine besonders gute mechanische und elektrische Anbindung, insbesondere an die Keramik. Beispielsweise kann ein niederohmiger Kontakt zur Keramik erzielt werden. Weiterhin ermöglicht eine nickelhaltige Schicht eine zuverlässige Kontaktierung des Sensorelements durch Kontaktstücke aus unterschiedlichen Materialien. Dadurch wird eine hohe Flexibilität in der Anwendung bereitgestellt. Beispielsweise erlaubt eine derartige Elektrode eine Anbindung von gold-, silber-, aluminium-, oder kupferhaltigen Kontaktstücken. Vorzugsweise sind das Material des Kontaktstücks und das Material der Elektrode, beispielsweise das Material einer Deckschicht, aufeinander abgestimmt. Beispielsweise wird bei einem goldhaltigen Kontaktstück eine goldhaltige Deckschicht und bei einem aluminiumhaltigen Kontaktstück eine aluminiumhaltige Deckschicht verwendet.

Die nickelhaltige Schicht ist gesputtert. Die nickelhaltige Schicht ist direkt auf der Keramik des Grundkörpers aufgebracht und steht damit in unmittelbarem Kontakt mit der Keramik.

Die nickelhaltige Schicht enthält zusätzlich einen Anteil an Vanadium. Ein Anteil an Vanadium kann insbesondere aus prozesstechnischen Gründen für ein Sputterverfahren von Vorteil sein. Vanadium ist in einem Gewichtsanteil von 7% in der nickelhaltigen Schicht vorhanden. Nickel ist beispielsweise in einem Gewichtsanteil von 93% vorhanden. Die Dicke der nickelhaltigen Schicht liegt beispielsweise im Bereich von 0,3 µm bis 10 µm.

Die Elektrode weist wenigstens eine gesputterte Schicht auf. Beispielsweise sind alle Schichten durch Sputtern aufgebracht. Vorzugsweise ist die Elektrode frei von einer eingebrannten Paste.

Bei einer gesputterten Elektrode besteht ein Vorteil in der geringeren thermischen Belastung des Sensorelements im Herstellungsprozess, insbesondere durch den Wegfall eines Einbrennens einer Metallisierungspaste bei Temperaturen von beispielsweise 700°C-900°C. Weiterhin erlaubt ein Sputterprozess eine besonders kostengünstige Herstellung, da beispielsweise Prozesskosten einer Einbrandelektrode, wie z. B. Pastenaufbringung und -trocknung sowie der anschließende Einbrand wegfallen. Zudem ermöglicht ein Sputterprozess eine größere Materialwahl bei der Elektrode. Dadurch wird auch eine größere Flexibilität hinsichtlich Material und Befestigung eines Kontaktelements erreicht.

Beispielsweise handelt es sich bei der Elektrode um eine Dünnschichtelektrode. Beispielsweise weist die gesamte Elektrode eine Dicke im Bereich von 0,3 µm bis 30 µm auf.

In einer Ausführungsform weist die Elektrode mehrere Schichten auf, die direkt übereinander angeordnet sind. Gemäß eines Beispiels, das kein Teil der beanspruchten Erfindung ist, weist die Elektrode eine untere und eine obere Schicht auf. Die untere Schicht ist vorzugsweise in direktem Kontakt mit der Keramik des Grundkörpers. Die obere Schicht ist beispielsweise direkt auf der unteren Schicht aufgebracht. Vorzugsweise sind beide Schichten gesputtert. Die Elektrode kann auch mehr als zwei Schichten aufweisen.

Gemäß eines Beispiels, das kein Teil der beanspruchten Erfindung ist, enthält die untere Schicht Chrom oder besteht aus Chrom. Eine chromhaltige Schicht kann insbesondere als Haftvermittler zur Keramik vorteilhaft sein.

Gemäß eines Beispiels, das kein Teil der beanspruchten Erfindung ist, enthält die obere Schicht Nickel oder besteht aus Nickel. Zusätzlich kann die obere Schicht einen Anteil an Vanadium aufweisen.

In einer Ausführungsform weist die Elektrode zusätzlich eine Deckschicht auf. Die Deckschicht ist die oberste Schicht der Elektrode und schließt somit die Elektrode nach oben hin ab. Der unter der Deckschicht liegende Teil der Elektrode kann auch als Elektrodenbasis bezeichnet werden. Es kann sich hierbei insbesondere um ein oder mehrere Schichten handeln.

Beispielsweise enthält die Deckschicht ein oxidationshemmendes Metall. Insbesondere enthält die Deckschicht wenigstens ein Material aus der Menge Silber, Gold, Kupfer und Aluminium. Die Deckschicht kann auch Zinn enthalten. Vorzugsweise ist die Deckschicht gesputtert.

Durch die Deckschicht kann eine Korrosion der Elektrode, insbesondere eine Korrosion einer unter der Deckschicht liegenden Schicht der Elektrode verhindert werden. Weiterhin kann die Deckschicht auch die mechanische Belastbarkeit der Elektrode verbessern.

Alternativ oder zusätzlich dazu kann die Deckschicht für die Kontaktierung mit einem Kontaktelement von Vorteil sein. In einer Ausführungsform ist das Kontaktelement direkt an der Deckschicht befestigt.

Beispielsweise kann im Falle einer Anbindung eines Kontaktelements mittels Sinters, insbesondere unter Druck bei niedrigen Temperaturen, eine silberhaltige oder aus Silber bestehende Deckschicht vorteilhaft sein. Das Kontaktelement wird in diesem Fall vorzugsweise direkt an der Deckschicht angebracht. Bei einer Lötverbindung eines Kontaktelements ist beispielsweise eine goldhaltige oder eine aus Gold bestehende Deckschicht vorteilhaft. Insbesondere kann dadurch eine migrationsbeständige Anbindung erreicht werden. Vorzugsweise ist das Lotmaterial silber- und bleifrei. Bei einer Bondverbindung kann beispielsweise an eine goldhaltige oder eine aus Gold bestehende Deckschicht ein Golddraht befestigt werden.

In einer Ausführungsform ist das Kontaktelement an einem Teil der Elektrode befestigt, die teilweise von der Deckschicht bedeckt ist. Beispielsweise ist die Deckschicht nur auf einem Teil der Elektrodenbasis aufgebracht, so dass ein Teil der Elektrodenbasis frei von der Deckschicht ist. In diesem Fall kann eine elektrische Kontaktierung der Elektrode direkt an der Elektrodenbasis erfolgen. Die Deckschicht dient dann beispielsweise nur als Oxidationsschutz für freiliegende Teile der Elektrodenbasis.

Beispielsweise weist die Deckschicht eine Dicke im Bereich von 0,05 µm bis 20 µm auf. Die Elektrodenbasis, d.h., der Rest der Elektrode weist beispielsweise eine Dicke im Bereich von 0,3 µm bis 10 µm auf.

In einer Ausführungsform weist das Sensorelement wenigstens ein Kontaktelement auf, das an der Elektrode befestigt ist. Vorzugsweise sind zwei Kontaktelemente vorhanden, die jeweils an einer von zwei Elektroden des Sensorelements befestigt sind. Vorzugsweise ist das Kontaktelement direkt an der Elektrode befestigt.

Beispielsweise ist das Kontaktelement als Draht ausgebildet. Der Draht kann rund ausgebildet sein oder an der Verbindungsstelle abgeflacht sein. Des Weiteren kann ein Draht mit rechteckigem Querschnitt oder ein flaches Band verwendet werden. Es kann sich dabei um eine kurze Drahtbrücke handeln, die beispielsweise zur elektrischen Verbindung des Sensorelements mit einem Anschlusselement dient. Insbesondere kann es sich um einen dünnen Draht handeln, der beispielsweise durch Dünndrahtbonden an der Elektrode befestigt ist.

Das Anschlusselement kann beispielsweise an einem Träger angeordnet sein, Teil eines Trägers sein oder als Träger ausgebildet sein. Beispielsweise handelt es sich bei dem Anschlusselement um eine Leiterbahn auf einer Platine, um einen leitfähigen Träger eines Fühlers oder um eine Metallisierung eines derartigen Trägers.

Auch das Kontaktstück kann an einem Träger angeordnet sein, Teil eines Trägers sein oder als Träger ausgebildet sein. In einer Ausführungsform bildet das Kontaktstück gleichzeitig einen Träger für das Sensorelement oder ist ein integraler Bestandteil des Trägers. In diesem Fall ist die Elektrode des Sensorelements vorzugsweise direkt am Träger befestigt, d.h. ohne ein weiteres, separates Kontaktelement. Beispielsweise wird das Kontaktstück in diesem Fall durch Dickdrahtbonden am der Elektrode befestigt.

In einer Ausführungsform ist das Kontaktstück als ein separates Kontaktelement ausgebildet. Insbesondere ist das Kontaktstück kein integraler Bestandteil eines Trägers. Das Kontaktstück kann an einem Träger befestigt sein, beispielsweise durch Schweißen oder Bonden.

Beispielsweise ist das Kontaktelement durch Schweißen oder Bonden an der Elektrode befestigt. Das Kontaktelement kann auch durch Löten an der Elektrode befestigt sein.

Es hat sich gezeigt, dass die Temperaturbeständigkeit des Sensorelements durch diese Verbindungstechniken verbessert werden kann. Insbesondere weist die Kontaktstelle, d.h., die Verbindungsstelle zwischen Kontaktelement und Elektrode, eine gute Langzeitstabilität auf. Bei lotfreien, insbesondere silberfreien, Aufbauten wird auch die Migrationsbeständigkeit verbessert.

Gemäß einem weiteren Aspekt der Erfindung wird eine Sensoranordnung aufweisend ein wie oben beschriebenes Sensorelement angegeben. Die Sensoranordnung weist einen Träger zum Tragen des Grundkörpers auf. Der Grundkörper ist vorzugsweise am Träger befestigt. Der Träger weist vorzugsweise eine ausreichende Eigenstabilität auf, um den Grundkörper in einer festen Position zu halten, insbesondere auch in unterschiedlichen Orientierungen des Trägers, ohne dass eine Formänderung der Trägers oder eine Veränderung der Position des Grundkörpers auftritt.

Der Träger kann neben seiner Funktion des Tragens des Grundkörpers auch zum elektrischen Anschluss des Grundkörpers dienen. Der Träger kann elektrisch leitend ausgebildet sein oder elektrisch leitende Teile aufweisen. Insbesondere kann der Grundkörper mit dem Träger elektrisch leitend verbunden sein.

Die Elektrode des Sensorelements ist mit dem Träger beispielsweise durch eine Schweiß- oder Bondverbindung oder durch Sintern verbunden, insbesondere elektrisch verbunden. Die Verbindung kann direkt oder indirekt sein.

In einer Ausführungsform ist die Elektrode des Sensorelements direkt mit dem Träger elektrisch verbunden. In diesem Fall kann das oben beschriebene Kontaktstück gleichzeitig als Träger fungieren oder einen Teil des Trägers bilden. Beispielsweise ist die Elektrode mit dem Träger durch Bonden, insbesondere Dickdrahtbonden, oder durch Sintern verbunden.

In einer Ausführungsform ist die Elektrode indirekt mit dem Träger elektrisch verbunden. Insbesondere ist das Kontaktstück als separates Kontaktelement ausgebildet und kein integraler Bestandteil des Trägers. Die Elektrode ist in diesem Fall über das Kontaktelement mit dem Träger verbunden. Das Kontaktelement ist durch eine Schweiß- oder Bondverbindung mit der Elektrode verbunden. Beispielsweise kann es sich bei dem Kontaktelement um einen Draht, beispielsweise um eine Drahtbrücke handeln.

In einer Ausführungsform ist die Sensoranordnung als Fühler ausgebildet. Der Fühler wird beispielsweise zur Messung von Parametern eines strömenden Mediums eingesetzt, insbesondere einer Temperatur. Beispielsweise kann der Fühler durch eine Öffnung in die Wandung eines Rohres gesteckt werden. Der Träger weist beispielsweise einen dicken, formstabilen Draht auf, der mit der Elektrode verbunden ist. Der Draht ist beispielsweise direkt an der Elektrode durch Dickdrahtbonden befestigt. Alternativ kann der Draht auch über eine Drahtbrücke mit der Elektrode verbunden sein.

In einer Ausführungsform ist der Träger als Platine ausgebildet. Insbesondere kann die Platine Leiterbahnen aufweisen, die mit den Elektroden des Sensorelements elektrisch verbunden sind. Eine Elektrode kann mit einer Leiterbahn durch ein Kontaktelement, beispielsweise eine Drahtbrücke, durch Schweißen oder Bonden verbunden sein. Das Sensorelement kann mit einer weiteren Elektrode auf eine Leiterbahn aufgesetzt und an der Leiterbahn befestigt sein. Beispielsweise kann die weitere Elektrode mit der Leiterbahn versintert sein, beispielsweise unter Druck bei niedriger Temperatur.

Die Sensoranordnung kann eine Umhüllung aufweisen, die das Sensorelement zumindest teilweise umgibt. Die mechanische Befestigung des Sensorelements am Träger kann auch mittels der Umhüllung erfolgen.

Im Folgenden werden die hier beschriebenen Gegenstände anhand von schematischen und nicht maßstabsgetreuen Ausführungsbeispielen näher erläutert.

Es zeigen:
- Figur 1: eine perspektivische Ansicht eines Sensorelements,
- Figur 2: eine erste Ausführungsform einer Sensoranordnung,
- Figur 3A: eine zweite Ausführungsform einer Sensoranordnung,
- Figur 3B: ein vergrößerter Ausschnitt aus Figur 3A,
- Figur 4A: eine dritte Ausführungsform einer Sensoranordnung,
- Figur 4B: ein vergrößerter Ausschnitt aus Figur 4A.

Vorzugsweise verweisen in den folgenden Figuren gleiche Bezugszeichen auf funktionell oder strukturell entsprechende Teile der verschiedenen Ausführungsformen.

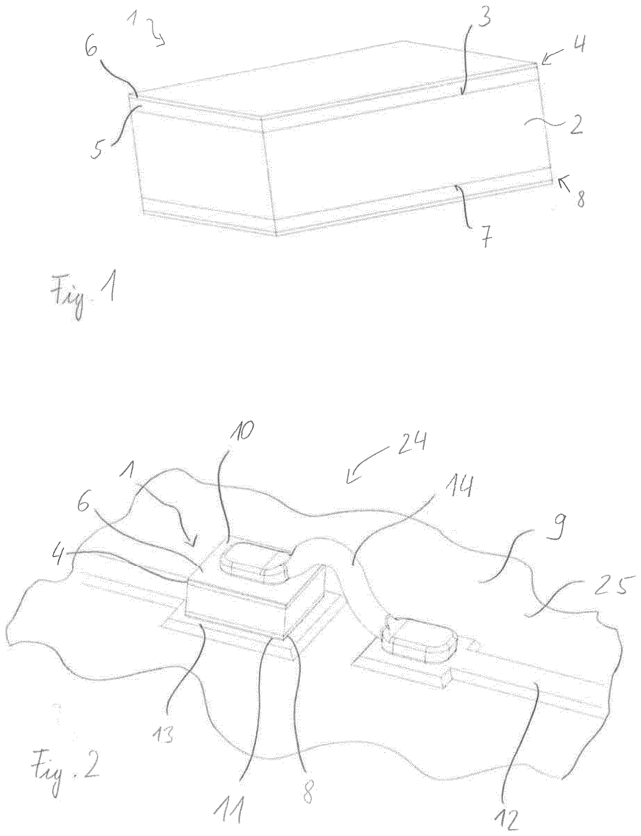

Figur 1 zeigt ein Sensorelement 1, insbesondere einen Sensorchip. Das Sensorelement 1 ist vorzugsweise zur Messung einer Temperatur ausgebildet. Das Sensorelement weist einen keramischen Grundkörper 2 auf. Insbesondere ist die Keramik eine NTC (Negative-Temperature-Coefficient) Keramik. Beispielsweise weist die Keramik eine Perowskitstruktur auf. Insbesondere kann die Keramik auf dem System Y-Ca-Cr-Al-(Sn)-O beruhen, wobei in Klammern gesetzte Elemente optional vorhanden sind. Ein derartiges Sensorelement 1 eignet sich besonders für Hochtemperaturanwendungen. Alternativ kann das Sensorelement 1, insbesondere bei geringeren Anwendungstemperaturen, eine Keramik mit einer Spinellstruktur aufweisen. Beispielsweise kann die Keramik auf dem System Ni-Co-Mn-(Al)-(Fe)-(Cu)-(Zn)-(Ca)-(Zr)-(Ti)-(Mg)-O beruhen.

Das Sensorelement 1 weist eine Elektrode 4 auf, die auf einer Seitenfläche 3 des Grundkörpers 2 angeordnet ist. Auf einer weiteren, gegenüberliegenden Seitenfläche 7 ist eine weitere Elektrode 8 angeordnet. Im Folgenden wird der Aufbau der einen Elektrode 4 beschrieben, wobei die Beschreibung analog für die weitere Elektrode 8 gelten kann.

Die Elektrode 4 ist eine schichtförmige Elektrode mit mehreren Schichten 5, 6. Die Schichten 5, 6 sind beispielsweise gesputtert. Vorzugsweise ist die Elektrode 4 derart ausgebildet, dass eine zuverlässige elektrische Kontaktierung der Elektrode 4 durch Sintern unter Druck bei niedrigen Temperaturen, durch Bonden oder durch Schweißen erfolgen kann.

Die Elektrode 4 weist eine Schicht 5 auf, die auch als Elektrodenbasis bezeichnet wird. Die Schicht 5 ist direkt auf der Keramik des Grundkörpers 2 aufgebracht. Die Schicht enthält Nickel, beispielsweise mit einem Anteil an Vanadium, oder besteht aus diesen Metallen.

Auf der Schicht 5 ist eine Deckschicht 6 aufgebracht. Beispielsweise dient die Deckschicht 6 als Korrosionsschutz für die Elektrodenbasis, insbesondere zur Verhinderung einer Oxidation. Die Deckschicht 6 enthält beispielsweise Silber, Gold, Kupfer oder Aluminium oder besteht aus einem dieser Materialien.

In einem Beispiel, das kein Teil der beanspruchten Erfindung ist, kann die Elektrodenbasis mehrschichtig ausgebildet sein. Eine untere Schicht der Elektrodenbasis ist beispielsweise in direktem Kontakt mit der Keramik. Die untere Schicht enthält beispielsweise Chrom oder besteht aus Chrom. Die Elektrodenbasis kann zudem eine obere Schicht aufweisen, die auf der unteren Schicht aufgebracht ist. Die obere Schicht enthält beispielsweise Nickel mit einem Anteil an Vanadium oder besteht aus diesen Metallen.

Die Schicht 5 weist beispielsweise eine Dicke im Bereich von 0,3 µm bis 10 µm auf. Vorzugsweise liegt die Dicke im Bereich von 0,5 µm bis 6 µm. Diese Dicke kann sowohl für eine einschichtige als auch eine mehrschichtige Elektrodenbasis gelten. Die Deckschicht weist beispielsweise eine Dicke im Bereich von 0,05 µm bis 20 µm auf.

Vorzugsweise sind alle Schichten 5, 6 der Elektrode 4 durch Sputtern aufgebracht. Auf diese Weise kann eine Elektrode mit einer erhöhten Temperaturbeständigkeit und einer verbesserten Langzeitstabilität bereitgestellt werden.

Figur 2 zeigt eine Sensoranordnung 24 aufweisend ein Sensorelement 1, das an einer Platine 9 befestigt ist. Dieser Aufbau ist insbesondere im Bereich der Leistungselektronik anwendbar. Das Sensorelement 1 ist wie in Figur 1 ausgebildet.

Die Platine 9 fungiert als Träger 25 für das Sensorelement 1 sowie zum elektrischen Anschluss des Sensorelements 1. Das Sensorelement 1 weist eine Oberseite 10 und eine Unterseite 11 auf. Das Sensorelement 1 ist mit seiner Unterseite 11 an der Platine 9 befestigt. Die an der Oberseite 10 angeordnete Elektrode 4 ist mit einer ersten Leiterbahn 12 und die an der Unterseite 11 angeordnete weitere Elektrode 8 ist mit einer weiteren Leiterbahn 13 der Platine 9 elektrisch verbunden.

Das Sensorelement 1 ist beispielsweise mit seiner Unterseite 11 an der weiteren Leiterbahn 13 angelötet. Für eine migrationsbeständige, silber- und bleifreie Anbindung über Löten ist eine Deckschicht 6 enthaltend Gold oder bestehend aus Gold vorteilhaft. Alternativ ist die weitere Elektrode 8 mit der weiteren Leiterbahn 13 versintert. Dazu wird beispielsweise eine feindisperse Silberpaste auf die Leiterbahn 13 und/oder die weitere Elektrode 8 aufgetragen. Es wird beispielsweise unter Druck bei niedrigen Temperaturen gesintert. In diesem Fall weist die Deckschicht der weiteren Elektrode 8 vorzugsweise Silber auf oder besteht aus Silber.

Die Elektrode 4 an der Oberseite 10 ist über ein Kontaktstück 14 mit der Leiterbahn 12 verbunden. Das Kontaktstück 14 ist beispielsweise durch Bonden an der Elektrode 4 und/oder der Platine 9 befestigt. Insbesondere ist das Kontaktstück 14 durch eine Drahtbrücke gebildet. Der Draht ist an seinen Enden abgeflacht. Insbesondere handelt es sich um einen dünnen Draht, der durch Dünndrahtbonden befestigt sein kann. Es wird beispielsweise ein Gold-, Aluminium- oder Kupferdraht verwendet. Die Deckschicht 6 der Elektrode 4 weist beispielsweise Gold auf.

Das Kontaktstück 14 weist vorzugsweise temperaturstabile Metalle mit geringer Korrosionsneigung auf. Es können beispielsweise edle Metalle wie z. B. Pt, Au, Ag oder Halbedelmetalle wie z. B. Cu als auch unedle Metalle wie z. B. Fe, Ni oder Legierungen Verwendung finden. Weiterhin kann das Kontaktstück 14 auch mit unterschiedlichen Bereichen aufweisend unterschiedliche Materialien aufgebaut sein. Beispielsweise weist das Kontaktstück 14 Teilbereiche unterschiedlicher Materialien auf. Das Kontaktstück 14 kann einen metallischen Drahtkern aufweisen und mit einem oder mehreren anderen Metallen ummantelt sein. Die Oberfläche des Kontaktstücks 14 kann zusätzlich noch eine Beschichtung wie z. B. Verzinnung, Vernickelung etc. aufweisen.

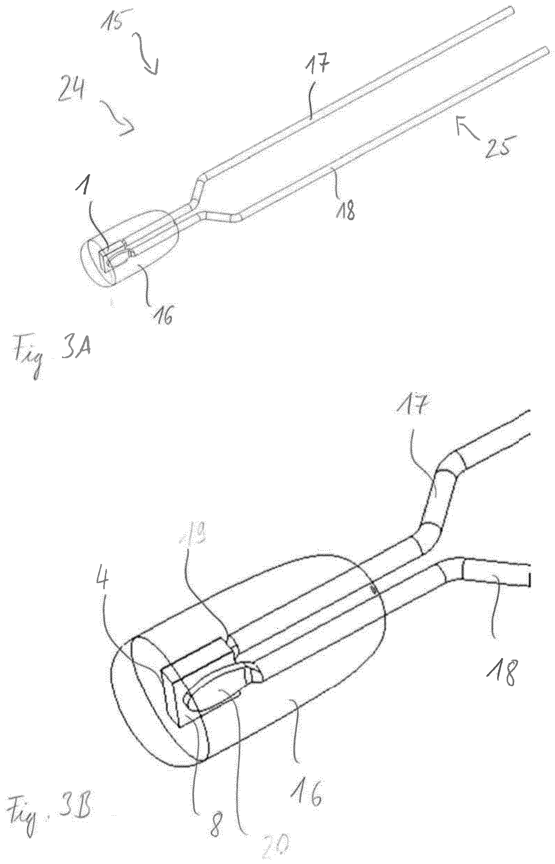

Figur 3A zeigt eine weitere Ausführungsform einer Sensoranordnung 24. Figur 3B zeigt einen vergrößerten Ausschnitt aus Figur 3A. Bei der Sensoranordnung 24 handelt es sich um einen Fühler 15 aufweisend ein Sensorelement 1. Der Fühler 15 ist ein beispielsweise als Temperaturfühler ausgebildet. Das Sensorelement 1 ist beispielsweise wie in Figur 1 ausgebildet.

Der Fühler 15 ist stabförmig ausgebildet. Der Fühler 15 wird beispielsweise zur Messung einer Temperatur eines strömenden Mediums eingesetzt. Beispielsweise kann der Fühler 15 durch eine Öffnung in die Wandung eines Rohres gesteckt sein.

Der Fühler 15 weist einen Träger 25 umfassend zwei Trägerelemente 17, 18 auf. Die Trägerelemente 17, 18 sind beispielsweise als dicke Drähte ausgebildet, die das Sensorelement 1 tragen können und eine ausreichende Formstabilität aufweisen. Die Trägerelemente 17, 18 sind jeweils stabförmig ausgebildet.

Das Sensorelement 1 ist von einer Umhüllung 16 umgeben. Die Umhüllung 16 kann eine ausreichende mechanische Stabilität des Fühlers 15 gewährleisten. Weiterhin kann durch die Umhüllung 16 ein Schutz gegen äußere Einflüsse erfolgen, beispielsweise kann eine Korrosion des Sensorelements 1 durch aggressive Medien verhindert werden. Beispielsweise weist die Umhüllung 16 ein Polymer oder Glas auf. Die Trägerelemente 17, 18 ragen in die Umhüllung 16 hinein. Insbesondere sind die Kontaktstellen zwischen den Trägerelementen 17, 18 und dem Sensorelement 1 von der Umhüllung 16 umgeben.

Die Trägerelemente 17, 18 dienen auch zum elektrischen Anschluss des Sensorelements 1. Insbesondere sind die Trägerelemente 17, 18 elektrisch leitfähig. Die Enden der Trägerelemente 17, 18 sind als Kontaktstücke 19, 20 zur direkten elektrischen Kontaktierung mit den Elektroden 4, 8 ausgebildet. Die Kontaktstücke 19, 20 bilden einen integralen Bestandteil der Trägerelemente 17, 18. Die Kontaktstücke 19, 20 der Trägerelemente 17, 18 sind beispielsweise an den Elektroden 4, 8 angeschweißt oder mittels Dickdrahtbondens befestigt.

Vorzugsweise wird zur Verbindung zwischen den Trägerelementen 17, 18 und den Elektroden 4, 8 kein Lotmittel eingesetzt. Bei einem Schweiß- oder Bondverfahren kann eine Migration verhindert werden und die Zuverlässigkeit des Sensorelements 1 erhöht werden.

Die Trägerelemente 17, 18 und insbesondere die Kontaktstücke 19, 20 können vom Material und Aufbau wie das in Figur 2 beschriebene Kontaktstück 14 ausgebildet sein. Allerdings weisen die Kontaktstücke 19, 20 zusammen mit dem restlichen Teil der Trägerelemente 17, 18 eine ausreichende Eigenstabilität zum Tragen des Sensorelements 1 auf.

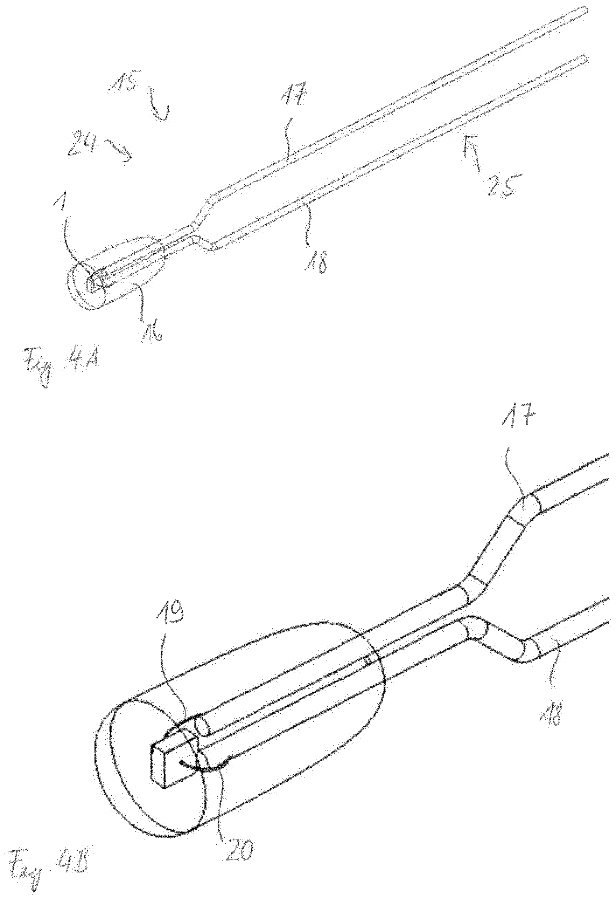

Figur 4A zeigt eine weitere Ausführungsform einer als Fühler 15 ausgebildeten Sensoranordnung 24. Figur 4B zeigt einen vergrößerten Ausschnitt aus Figur 4A. Die Sensoranordnung 24 ist ähnlich wie die Sensoranordnung 24 aus Figur 3A ausgebildet. Allerdings ist in der hier gezeigten Ausführungsform das Sensorelement 1 nicht direkt an den Trägerelementen 17, 18 befestigt, insbesondere nicht direkt mit den Trägerelementen 17, 18 elektrisch verbunden.

Vorliegend stellt die Umhüllung 16 die mechanische Befestigung des Sensorelements 1 am Träger 25 bereit.

Stattdessen ist das Sensorelement 1 über separate Kontaktstücke 19, 20 an den Trägerelementen 17, 18 befestigt. Die Kontaktstücke 19, 20 sind als Drähte, insbesondere als Bonddrähte ausgebildet.

Die Kontaktstücke 19, 20 können die Materialien aufweisen, wie sie für das Kontaktstück 14 in Figur 2 beschrieben sind. Insbesondere können die Kontaktstücke 19, 20 einen Kern aus einem ersten Material und eine Umhüllung aus einem zweiten Material aufweisen.

### Bezugszeichenliste

- 1: Sensorelement
- 2: Grundkörper
- 3: Seitenfläche
- 4: Elektrode
- 5: Schicht
- 6: Deckschicht
- 7: weitere Seitenfläche
- 8: weitere Elektrode
- 9: Platine
- 10: Oberseite
- 11: Unterseite
- 12: Leiterbahn
- 13: weitere Leiterbahn
- 14: Kontaktstück
- 15: Fühler
- 16: Umhüllung
- 17: Trägerelement
- 18: Trägerelement
- 19: Kontaktstück
- 20: Kontaktstück
- 22: Metallisierung
- 23: Metallisierung
- 24: Sensoranordnung
- 25: Träger

## Patentansprüche

1. Sensorelement
aufweisend einen keramischen Grundkörper (2) und wenigstens eine Elektrode (4, 8) die am Grundkörper (2) angeordnet ist, wobei die Elektrode (4, 8) eine Schicht (5) aufweist, welche Nickel und zusätzlich einen Anteil an elementarem Vanadium enthält und Vanadium in einem Gewichtsanteil von 7 % in der nickelhaltigen Schicht vorhanden ist, wobei die Schicht (5) gesputtert ist und wobei die Schicht (5) direkt auf der Keramik des Grundkörpers (2) aufgebracht ist.

2. Sensorelement nach Anspruch 1,
bei dem die Elektrode (4, 8) frei von einer eingebrannten Paste ist.

3. Sensorelement nach einem der vorangegangenen Ansprüche, bei dem die Elektrode (4, 8) eine Deckschicht (6) aufweist, die ein oxidationshemmendes Metall enthält.

4. Sensorelement nach Anspruch 3,
wobei die Deckschicht (6) wenigstens ein Material aus der Gruppe ausgewählt aus Silber, Gold, Kupfer, Aluminium und Zinn aufweist.

5. Sensorelement nach einem der Ansprüche 3 oder 4,
bei dem die Deckschicht (6) auf der Schicht (5) enthaltend Nickel aufgebracht ist.

6. Sensorelement nach einem der vorangegangenen Ansprüche, welches weiterhin ein Kontaktstück (14, 19, 20) aufweist, das an der Elektrode (4, 8) durch Schweißen, Bonden oder Löten befestigt ist.

7. Sensorelement nach einem der vorangegangenen Ansprüche, wobei Nickel in der nickelhaltigen Schicht (5) in einem Gewichtsanteil von 93% vorhanden ist.

8. Sensoranordnung aufweisend ein Sensorelement nach einem der vorangegangenen Ansprüche sowie einen Träger (25) zum Tragen des Grundkörpers (2).

9. Sensoranordnung nach Anspruch 8, wobei das Sensorelement (1) eine erste Elektrode (4) und eine zweite Elektrode (8) aufweist, die jeweils wenigstens eine Schicht (5) enthaltend Nickel aufweisen, wobei an der ersten Elektrode (4) ein Kontaktstück (14) durch Bonden, Schweißen oder Löten befestigt ist und bei der die zweite Elektrode (5) mit dem Träger (25) versintert oder verlötet ist.

## Claims

1. Sensor element having a ceramic main body (2) and at least one electrode (4, 8), which is arranged on the main body (2),
wherein the electrode (4, 8) has a layer (5) which contains nickel and additionally a fraction of elemental vanadium, and vanadium is present in the nickel-containing layer in a proportion by weight of 7%, wherein the layer (5) is sputtered and wherein the layer (5) is applied directly to the ceramic of the main body (2).

2. Sensor element according to claim 1,
in which the electrode (4, 8) is free from a fired paste.

3. Sensor element according to one of the preceding claims, in which the electrode (4, 8) has a top layer (6) that contains an oxidation-inhibiting metal.

4. Sensor element according to claim 3, wherein the top layer (6) comprises at least one material selected from the group consisting of silver, gold, copper, aluminium and tin.

5. Sensor element according to either of claims 3 and 4, in which the top layer (6) is applied to the layer (5) containing nickel.

6. Sensor element according to one of the preceding claims, which also has a contact piece (14, 19, 20), that is fastened to the electrode (4, 8) by welding, bonding or soldering.

7. Sensor element according to one of the preceding claims, wherein nickel is present in the nickel-containing layer (5) in a proportion by weight of 93%.

8. Sensor arrangement having a sensor element according to one of the preceding claims and also a carrier (25) for carrying the main body (2).

9. Sensor arrangement according to claim 8, wherein the sensor element (1) has a first electrode (4) and a second electrode (8), which each have at least one layer (5) containing nickel, wherein a contact piece (14) is fastened to the first electrode (4) by bonding, welding or soldering and in which the second electrode (5) is sintered or soldered to the carrier (25).

## Revendications

1. Élément formant capteur comportant un corps de base (2) en céramique et au moins une électrode (4, 8) qui est disposée sur le corps de base (2),
l'électrode (4, 8) comportant une couche (5) qui contient du nickel et en outre une proportion de vanadium élémentaire et du vanadium étant présent dans une proportion en poids de 7 % dans la couche contenant du nickel, la couche (5) étant formée par pulvérisation et la couche (5) étant appliquée directement sur la céramique du corps de base (2).

2. Élément formant capteur selon la revendication 1, dans lequel l'électrode (4, 8) est exempte de pâte brûlée.

3. Élément formant capteur selon l'une des revendications précédentes, dans lequel l'électrode (4, 8) comporte une couche de recouvrement (6) qui contient un métal inhibiteur d'oxydation.

4. Élément formant capteur selon la revendication 3, la couche de recouvrement (6) comportant au moins un matériau choisi dans le groupe comprenant l'argent, l'or, le cuivre, l'aluminium et l'étain.

5. Élément formant capteur selon l'une des revendications 3 ou 4, dans lequel la couche de recouvrement (6) est appliquée sur la couche (5) contenant du nickel.

6. Élément formant capteur selon l'une des revendications précédentes, lequel comporte en outre une pièce de contact (14, 19, 20) qui est fixée à l'électrode (4, 8) par soudage, collage ou brasage.

7. Élément formant capteur selon l'une des revendications précédentes, le nickel étant présent dans la couche (5), contenant du nickel, dans une proportion en poids de 93 %.

8. Ensemble formant capteur comprenant un élément formant capteur selon l'une des revendications précédentes et un support (25) destiné à porter le corps de base (2).

9. Ensemble formant capteur selon la revendication 8, l'élément formant capteur (1) comportant une première électrode (4) et une deuxième électrode (8), qui comportent chacune au moins une couche (5) contenant du nickel,
une pièce de contact (14) étant fixée à la première électrode (4) par collage, soudage ou brasage et la deuxième électrode (5) étant frittée ou brasée au support (25) .
